# FASCICULE DE BREVET EUROPEEN

(11) **EP 1 745 704 B1**
(45) Date de publication et mention de la délivrance du brevet: **29.02.2012**
(21) Numéro de dépôt: 05015752.8
(22) Date de dépôt: 20.07.2005
(51) Int. Cl.: A23L 1/00, A23P 1/12, B29B 9/06

(54) **Dispositif pour fabriquer un produit granulaire par extrusion et découpage**
Vorrichtung zum Herstellen eines Granulats durch Extrusion und Zuschneiden
Apparatus for manufacturing a granular product by extrusion and cutting

(43) Date de publication de la demande: 24.01.2007
(73) Titulaire: Nestec S.A., 1800 Vevey (CH)
(72) Inventeur: Rosse, Meinrad, 1814 La Tour-de-Peilz (CH); Gaillard, Julien, 1093 La Conversion (CH)
(74) Mandataire: Rosolen-Delarue, Katell

(56) Documents cités:
- EP-A- 0 124 505
- FR-A- 2 080 966
- FR-A- 2 782 465
- US-B1- 6 537 050

## Description

La présente invention concerne un dispositif pour fabriquer un produit granulaire par extrusion et découpage. Plus particulièrement, la présente invention concerne un tel dispositif permettant d'augmenter le débit de production de produit granulaire par rapport aux dispositifs de l'art antérieur.

De tels dispositifs sont utilisables notamment pour fabriquer des produits constitués de grains tels que ceux obtenus par la mise en oeuvre du procédé décrit dans le brevet CH 600 802 qui concerne la fabrication de produits alimentaires déshydratés. Selon ce procédé, on extrude à travers une filière une matière alimentaire sous forme de poudre ou de pâte dans une enceinte où règne une pression sub-atmosphérique. On forme ainsi plusieurs boudins que l'on découpe en grains à la sortie des buses d'extrusion de la filière à l'aide d'une tête de découpage rotative pourvue généralement de trois couteaux formant chacun un même angle de coupe avec la face de sortie de la filière. L'extrusion est réalisée de préférence dans une enceinte sous vide ce qui permet d'obtenir, à une température modérée, une texture expansée du produit grâce à une brusque élimination d'une partie de l'eau sous forme de vapeur et des gaz initialement contenus dans la masse à extruder. En effectuant le découpage très près des buses d'extrusion, les tranches découpées continuent de gonfler et on peut ainsi obtenir des grains en forme de sphéroïdes ou d'ovoïdes, par exemple. Les grains obtenus ont tous à peu près les mêmes formes et les mêmes dimensions, sans particules grosses ou fines. Ainsi, on obtient une granulométrie beaucoup plus uniforme qu'en utilisant les dispositifs où les boudins extrudés sont concassés après avoir durci.

On notera que les applications de ces dispositifs ne se limitent pas à la fabrication de produits alimentaires, mais peuvent s'étendre à des produits granulaires de toute nature, que l'extrusion et le découpage soient effectués sous vide ou à la pression atmosphérique.

Le document FR-A-2 782 465 divulgue un tel dispositif selon le préambule de la revendication 1.

Pour satisfaire à la demande croissante des clients pour ces produits en grains, la demanderesse à chercher à augmenter la cadence de fabrication. Pour ce faire, la demanderesse a augmenté la vitesse d'extrusion ainsi que le nombre de buses d'extrusion. Or, la demanderesse s'est rendu compte qu'avec ces simples mesures, les grains éjectés après découpe avaient tendance à s'agglvmérer les uns aux autres en grappes ou chaînes que l'on pouvait difficilement dissocier ce qui, d'une part, perturbait la circulation ultérieure des grains dans l'installation et conduisait à une diminution du rendement de l'installation plutôt qu'à l'augmentation recherchée et, d'autre part, affectait la forme et l'aspect des grains extrudés.

La présente invention a pour but de remédier aux inconvénients susmentionnés ainsi qu'à d'autres encore en fournissant un dispositif pour fabriquer un produit granulaire par extrusion et découpage qui permette d'atteindre des débits de production de produits nettement plus élevés que les dispositifs de l'art antérieur.

L'invention a également pour but de fournir un tel dispositif qui soit de conception simple, économique et facile à mettre en oeuvre.

A cet effet, l'invention concerne un dispositif pour fabriquer un produit granulaire par extrusion et découpage selon la revendication 1 du brevet.

La demanderesse a en effet constaté que le phénomène d'agglomération des grains dans l'enceinte dans laquelle ils sont projetés après découpage résulte du fait que la densité de grains dans le volume dans lequel ils sont éjectés est trop grande et que ce volume est défini par la géométrie des couteaux. La demanderesse propose donc de remédier à cet inconvénient en agençant les lames de couteaux de la tête de découpage de manière telle que les grains découpés soient projetés et distribués dans plusieurs régions de l'enceinte et non concentrés dans une seule région comme cela était le cas dans les dispositifs de l'art antérieur. On peut ainsi utiliser le volume de l'enceinte dans laquelle les grains découpés sont éjectés de manière optimale, ce qui permet d'augmenter les cadences de production sans occasionner la formation de grappes de grains dans l'enceinte. Cet agencement limite donc, voire élimine les risques de blocage ultérieurs de l'installation de production dus à ces grappes.

Selon un mode de réalisation préféré de l'invention, les lames de couteaux présentent chacune une première face en regard de la face d'extrusion, et une seconde face qui intersecte la première face de manière à former une arête de découpage et qui est inclinée par rapport à ladite face d'extrusion, chaque type de lame se différenciant d'un autre type de lame par une inclinaison différente de la seconde face inclinée de la lame.

Ainsi, grâce à cet agencement, on améliore de manière simple la dispersion des produits extrudés dans le volume de l'enceinte dans la mesure où le produit extrudé est projeté sous vide selon des cônes de projection propres aux angles respectifs des lames des couteaux.

Selon une autre caractéristique de l'invention, deux lames successives de la tête de découpage sont de types différents.

Selon encore une autre caractéristique de l'invention, la tête de découpage comprend une pluralité de lames arrangées par paires, les lames d'un même type étant disposées de façon diamétralement opposée par rapport à l'axe de rotation de la tête de découpage, facilitant ainsi l'équilibrage dynamique de la tête de découpage.

D'autres caractéristiques et avantages de l'invention ressortiront plus clairement de la description détaillée qui suit d'un exemple de réalisation de la tête de découpage selon l'invention, cet exemple étant donné à titre purement illustratif et non limitatif seulement, en liaison avec le dessin annexé sur lequel :
- la figure 1 est une vue partielle simplifiée en coupe du dispositif selon l'invention;
- la figure 2 est une vue en perspective d'un mode de réalisation à trois paires de couteaux de la tête de découpe mise en oeuvre dans le dispositif selon l'invention;
- la figure 3 est une vue en élévation et en perspective de la tête de découpe et relation avec la filière d'extrusion ;
- les figures 4 à 6 illustrent des vues de côté de la tête de découpe représentée à la figure 2 montrant respectivement les trois orientations des lames de couteaux par rapport à la face d'extrusion, et
- les figures 7 et 8 montrent schématiquement la dispersion des produits extrudés selon deux cônes de projection différents propres aux angles respectifs des lames des couteaux, à partir de deux orifices d'extrusion alignés sur un même rayon de la filière d'extrusion.

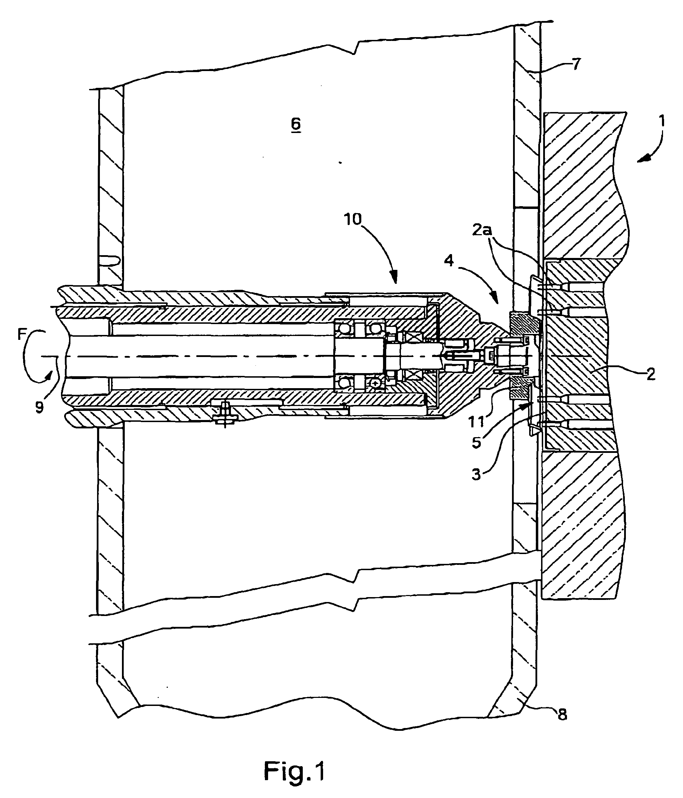

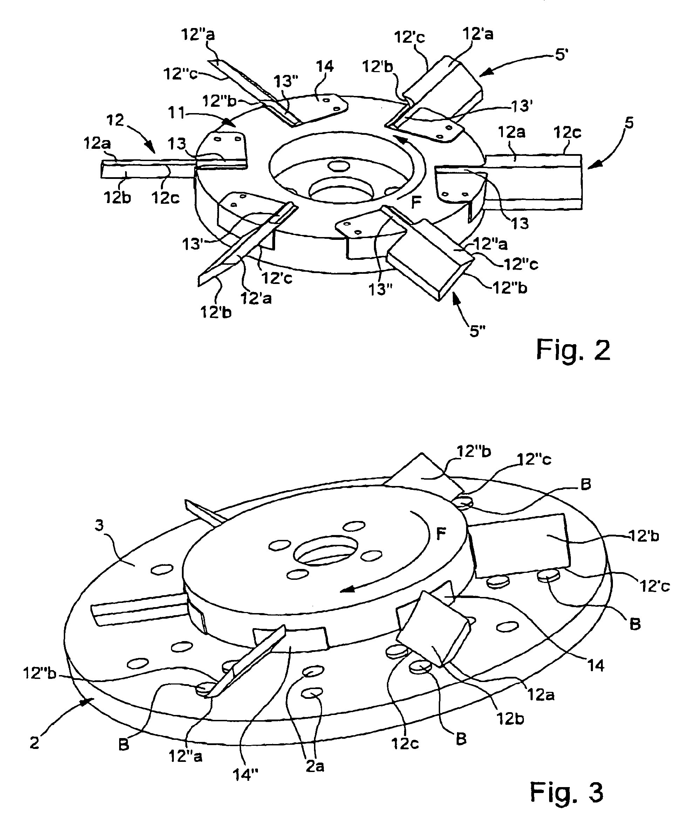

En référence aux dessins et en particulier aux figures 1 et 2, une extrudeuse 1 de type connu comporte à sa sortie au moins une filière d'extrusion 2 dont les orifices 2a sont répartis sur deux cercles et débouchent sur une surface plane 3 dite face d'extrusion. En regard de cette surface 3 se trouve une tête de découpage rotative 4 pourvue de couteaux 5 agencés pour couper les boudins de matière extrudée sortant de la filière 2.

La tête de découpage 4 se trouve à l'intérieur d'une chambre 6 agencée pour être maintenue à une pression sub-atmosphérique grâce à une pompe à vide (non représentée). L'enceinte de cette chambre est représentée schématiquement par une paroi périphérique 7 et une trémie inférieure 8 dans laquelle les produits granulaires fabriqués par le dispositif décrit ici tombent et sont recueillis au moyen d'un extracteur permettant de maintenir le vide dans la chambre 6. L'étanchéité entre l'extrudeuse 1 et la paroi 7 est assurée par des moyens non représentés.

La tête de découpage 4 tourne, dans le sens de la flèche F, autour d'un axe 9 perpendiculaire à la face 3 de l'extrudeuse. Elle est montée sur l'extrémité d'un arbre 10 dont l'autre extrémité est couplée à l'arbre d'un moteur électrique (non représenté).

En fonctionnement, le moteur fait tourner l'arbre 10 et la tête de découpage 4 à une vitesse réglable, qui peut aller par exemple jusqu'à 5000 tours par minute. Le produit pâteux extrudé à chaud par l'extrudeuse 1 forme, à la sortie de chaque orifice 2a de la filière 2, un boudin B qui est immédiatement découpé en rondelles par les couteaux 5 (figure 3). Comme le produit extrudé contient de la vapeur d'eau et éventuellement d'autres gaz comme on l'a expliqué plus haut, les rondelles gonflent dans la chambre sous vide 6 et se solidifient sous forme de grains qui tombent dans la trémie 8. On peut ajuster la taille, la forme et la cadence de fabrication des grains en réglant notamment la vitesse de l'extrudeuse 1, la vitesse du moteur, la pression dans la chambre 6.

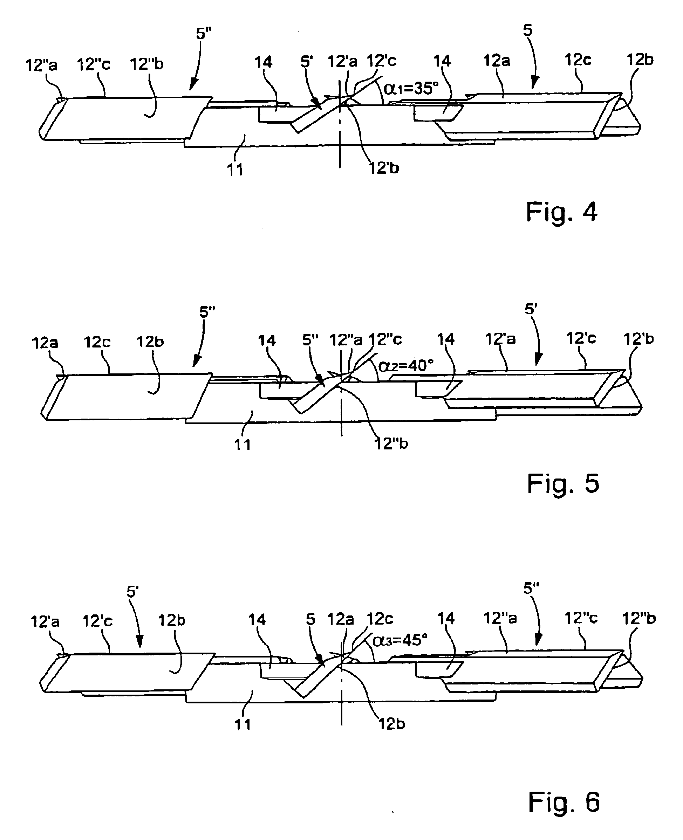

Une forme d'exécution de la tête de découpage rotative 4 est représentée aux figures 2 et 3. Elle comprend pour l'essentiel un support circulaire 11 sur lequel sont fixés plusieurs couteaux 5 qui s'étendent radialement vers l'extérieur du périmètre du support 11. Chacun de ces couteaux 5, 5', 5" se compose d'une lame tranchante 12, 12', 12" ayant une section de forme sensiblement trapézoïdale agencée tangentiellement audit support 11 et fixée à celui-ci par le biais d'un bras 13, 13', 13" intercalé dans un logement approprié du support circulaire 11 et d'une plaque de serrage 14 percée de deux trous pour son vissage ou son rivetage sur le support circulaire 11. Comme on peut le voir à l'examen des figures 2 et 3, chacune des lames 12, 12' 12" de couteaux 5, 5', 5" présente deux faces, respectivement 12a, 12'a, 12"a et 12b 12'b, 12"b, la première de ces faces 12a, 12'a, 12"a étant en regard de la face d'extrusion 3, tandis que la seconde face 12b 12'b, 12"b qui intersecte la première face 12a, 12'a, 12"a de manière à former une arête tranchante 12c, 12'c, 12"c est inclinée par rapport à ladite face d'extrusion 3 d'un angle α1, α2, α3 (figures 4, 5 et 6). Les couteaux 5, 5', 5" seront typiquement réalisés en acier trempé ou en tout autre matériau propre à réaliser des outils de coupe comme par exemple en céramique.

Selon une variante on pourra bien entendu prévoir de réaliser le support circulaire 11 d'une seule pièce avec les couteaux 5, 5', 5".

Dans une variante d'exécution simplifiée non représentée, la tête de découpage 4 ne comprend que deux couteaux 5 préférentiellement montés de manière diamétralement opposée sur le support circulaire 11, ces deux couteaux 5 étant de types différents ce qui, au sens de l'invention, signifie que l'indinaison de la seconde face 12b du premier couteau par rapport à la face d'extrusion 3 est différente de l'inclinaison de la seconde face du couteau opposé. Comme les deux couteaux ne sont pas strictement identiques, on comprendra qu'un tel agencement doit être équilibré au moyen d'un balourd pour garantir l'équilibrage dynamique de la tête de découpage 4. Ceci est d'autant plus nécessaire que les vitesses de rotation de la tête de découpage 4 sont élevées et que le moindre déséquilibrage endommagerait l'arbre 12 et les moyens d'entraînement.

Dans l'exemple représenté à la figure 2, la tête de découpage 4 porte six couteaux 5, 5', 5" régulièrement espacés, deux couteaux 5, 5' ; 5' 5" ; 5" ; 5 successifs étant de types différents, c'est-à-dire que l'inclinaison, par rapport à la face d'extrusion 3, de la seconde face 12b d'un couteau 5 donné est différente de l'inclinaison de la seconde face 12'b du couteau suivant 5'. De manière préférée, et comme il ressort de la figure 2, on apparie les couteaux 5.5', 5" par paires. Autrement dit, deux couteaux 5 d'un même type, c'est-à-dire dont l'inclinaison des secondes faces 12b, des lames 12, par rapport à la face d'extrusion 3 sont les mêmes, sont disposés de façon diamétralement opposée par rapport à l'axe de rotation de la tête de découpage 4.

L'angle d'inclinaison α1, α2, α3 de la seconde face de chaque lame par rapport à la surface de la face d'extrusion est choisi entre 15° et 75°. Sachant que du choix de l'angle dépend également la qualité de la coupe ainsi que la possibilité de réaffutage des lames on choisira des angles compris de préférence entre 30° et 60°.

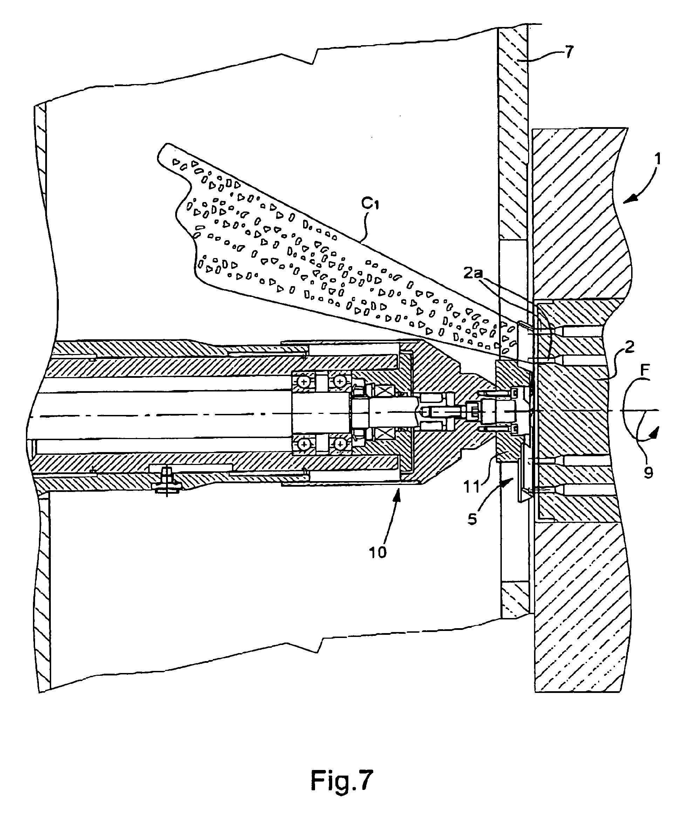

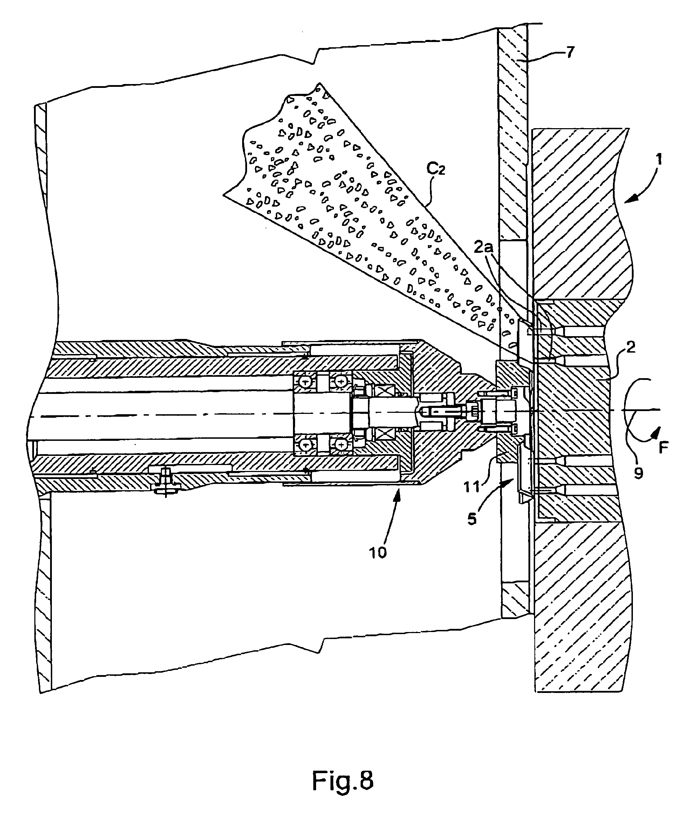

Comme représenté sur les figures 4 à 6, la tête de découpage comprend trois paires de lames, les lames diamétralement opposées de chaque paire présentant un angle d'indinaison α1, α2 et α3 de leur face inclinée par rapport à la face d'extrusion respectivement de α1= 35° (figure 3). α2 = 40° (figure 4) et α3 = 45° (figure 5). Un tel agencement permet d'atteindre le but recherché de l'invention, à savoir améliorer la dispersion des produits extrudés dans le volume de l'enceinte, dans la mesure où le produit extrudé est projeté sous vide à l'instant de la découpe, à partir de chaque orifice d'extrusion, selon trois cônes de projection propres aux angles respectifs des trois paires de lames de couteaux passant devant ces orifices. A titre d'exemple, on a représenté sur les figures 7 et 8 la dispersion des produits extrudés, à partir de deux orifices d'extrusion alignés sur un même rayon de la filière d'extrusion. Comme on peut le constater, les produits extrudés sont éjectés selon deux cônes de projection distincts C1 et C2 correspondant respectivement à la découpe de ces produits par deux lames présentant des angles d'inclinaison par rapport à la face d'extrusion différents. En outre, un tel agencement par paire simplifie considérablement les problèmes d'équilibrage dynamique de la tête de découpage dans la mesure où les paires de lames de couteaux s'équilibrent mutuellement.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, il peut être envisagé de réaliser des couteaux dont les faces arrières des lames présenteraient toutes la même inclinaison par rapport à la face d'extrusion mais dont les arêtes tranchantes formeraient des angles différents avec les rayons de la tête de découpage.

## Revendications

1. Dispositif pour fabriquer un produit granulaire par extrusion et découpage, comportant une extrudeuse (1) pourvue d'au moins une filière d'extrusion (2) présentant une face d'extrusion (3) dans laquelle débouchent des orifices d'extrusion (2a) une tête de découpage (4) entraînée en rotation et comportant au moins deux lames de couteaux (5) agencées pour passer devant les orifices, **caractérisé en ce** les lames (12) sont au moins de deux types et sont agencées pour présenter des angles de coupe différents par rapport à la face d'extrusion afin de projeter ledit produit granulaire après découpage selon au moins deux cônes de projection différents.

2. Dispositif selon la revendication 1, dans lequel lesdites lames de couteaux présentent chacune une première face (12a) en regard de la face d'extrusion et une seconde face (12b) qui intersecte la première face de manière à former une arête de découpage et qui est inclinée par rapport à ladite face d'extrusion (3), **caractérisé en ce** chaque type de lame se différencie d'un autre type de lame par une inclinaison différente de la seconde face inclinée de la lame.

3. Dispositif selon l'une quelconque des revendications 1 ou 2, **caractérisé en ce que** deux lames successives de la tête de découpage sont de types différents.

4. Dispositif selon l'une quelconque des revendications précédentes, **caractérisé en ce que** la tête de découpage (4) comprend une pluralité de lames (12) arrangées par paires, les lames d'un même type étant disposées de façon diamétralement opposée par rapport à l'axe de rotation de la tête de découpage.

5. Dispositif selon l'une quelconque des revendications 2 à 4, **caractérisé en ce que** l'angle de coupe pour chaque lame est choisi entre 15° et 75° et de préférence entre 30° et 60°.

6. Dispositif selon la revendication 5, **caractérisé en ce que** la tête de découpage comprend trois paires de lames, les lames de chaque paire présentant un angle d'inclinaison de leur face inclinée par rapport à la face d'extrusion respectivement de 35°, 40° et 45°.

## Claims

1. Device for manufacturing a granular product by extrusion and cutting, comprising an extruder (1) provided with at least one extrusion die (2) exhibiting an extrusion face (3) in which extrusion orifices (2a) open, a rotationally driven cutting head (4) comprising at least two cutter blades (5) designed to move past the orifices, **characterized in that** the blades (12) are at least of two types and are arranged in such a way as to exhibit different cutting angles with respect to the extrusion face in order to project the said granular product, after cutting, in at least two different projection cones.

2. Device according to Claim 1, in which the said cutter blades each have a first face (12a) facing the extrusion face and a second face (12b) intersecting the first face in such a way as to form a cutting edge and which is inclined with respect to the said extrusion face (3), **characterized in that** each type of blade differs from another type of blade **in that** the inclined second face of the blade has a different inclination.

3. Device according to either one of Claims 1 and 2, **characterized in that** two successive blades of the cutting head are of different types.

4. Device according to any one of the preceding claims, **characterized in that** the cutting head (4) comprises a plurality of blades (12) arranged in pairs, the blades of the same type being diametrically opposite one another with respect to the axis of rotation of the cutting head.

5. Device according to any one of Claims 2 to 4, **characterized in that** the cutting angle for each blade is chosen between 15° and 75° and preferably between 30° and 60°.

6. Device according to Claim 5, **characterized in that** the cutting head comprises three pairs of blades, the blades of each pair having an angle of inclination of their inclined face with respect to the extrusion face of 35°, 40° and 45°, respectively.

## Patentansprüche

1. Vorrichtung zur Herstellung eines Granulatprodukts durch Extrudieren und Zuschneiden, umfassend einen Extruder (1), der mit mindestens einer Extrusionsdüse (2) versehen ist und eine Extrusionsfläche aufweist (3), in der Extrusionsöffnungen (2a) münden, einen Schneidkopf (4), der in Drehung versetzt ist und mindestens zwei Messerklingen (5) umfasst, wobei die Messerklingen dazu ausgelegt sind, sich an den Öffnungen vorbeizubewegen,
**dadurch gekennzeichnet, dass** die Klingen (12) von mindestens zwei Bauarten sind und derart ausgelegt sind, dass sie im Vergleich zu der Extrusionsfläche unterschiedliche Schneidwinkel aufweisen, um nach dem Zuschneiden das Granulatprodukt gemäß mindestens zwei unterschiedlichen Projektionskonen auszustoßen.

2. Vorrichtung nach Anspruch 1, wobei die Messerklingen jeweils eine gegenüber der Extrusionsfläche stehende erste Fläche (12a), und eine zweite Fläche (12b), die die erste Fläche durchschneidet, um eine Schneidkante zu bilden, und die gegenüber dieser Extrusionsfläche (3) geneigt ist, aufweisen, **dadurch gekennzeichnet, dass** jede Klingenbauart sich von einer anderen Bauart durch eine unterschiedliche Neigung der zweiten geneigten Fläche der Klinge unterscheidet.

3. Vorrichtung nach einem der Ansprüche 1 oder 2 **dadurch gekennzeichnet, dass** zwei aufeinander folgende Klingen des Schneidkopfs von verschiedenen Bauarten sind.

4. Vorrichtung nach einem der vorhergehenden Ansprüche **dadurch gekennzeichnet, dass** der Schneidkopf (4) eine Vielzahl von paarweise angeordneten Klingen (12) umfasst, wobei die Klingen einer gleichen Bauart in Bezug auf die Drehachse des Schneidkopfs diametral gegenüberliegend angeordnet sind.

5. Vorrichtung nach einem der Ansprüche 2 bis 4 **dadurch gekennzeichnet, dass** fiir jede Klinge der Schneidwinkel zwischen 15 ° und 75 °, vorzugsweise zwischen 30 ° und 60 °, gewählt ist.

6. Vorrichtung nach Anspruch 5 **dadurch gekennzeichnet, dass** der Schneidkopf drei Paare von Klingen umfasst, wobei die Klingen jedes Paars einen Neigungswinkel der geneigten Fläche im Verhältnis zu der Extrusionsfläche von jeweils 35 °, 40 ° und 45 ° aufweisen.
